# EUROPÄISCHE PATENTSCHRIFT

(11) **EP 1 017 600 B1**
(45) Veröffentlichungstag und Bekanntmachung des Hinweises auf die Patenterteilung: **03.07.2002**
(21) Anmeldenummer: 98950043.4
(22) Anmeldetag: 16.09.1998
(51) Int. Cl.: B65D 83/14, B65D 83/16

(54) **VERPACKUNG MIT EINEM MILCH- BZW. MILCHERSATZPRODUKT**
MILK OR MILK SUBSTITUTE PRODUCT PACKAGING
EMBALLAGE CONTENANT UN PRODUIT LACTE OU UN SUCCEDANE DU LAIT

(30) Priorität: 24.09.1997 EP 97202924
(43) Veröffentlichungstag der Anmeldung: 12.07.2000
(73) Patentinhaber: SOCIETE DES PRODUITS NESTLE S.A., 1800 Vevey (CH)
(72) Erfinder: KUEHNER, Holger, D-84453 Muehldorf (DE); WILD, Otto-Michael, D-83536 Gars (DE); SCHWAN, Michael, CH-3507 Biglen (CH); HASLINGER, Franz, D-60594 Frankfurt (DE)
(74) Vertreter: Thomas, Alain
(86) Internationale Anmeldenummer: EP9805907
(87) Internationale Veröffentlichungsnummer: WO9915434

(56) Entgegenhaltungen:
- WO-A-94/28759
- WO-A-96/33618
- WO-A-97/33813
- DE-B- 1 210 309
- US-A- 3 677 443
- US-A- 4 199 608

## Beschreibung

Die Erfindung betrifft eine Verpackung mit einem Milchbzw. Milchersatzprodukt in flüssiger Phase.

Es ist schon bekannt, Milch in unter Druck stehenden Dosen herzustellen. Das Patent WO 96/33618 betrifft eine unter Druck stehende Milchverpackung,die zum Beispiel CO2 in gelöstem Zustand enthält. Dieses Patent betrifft ein Getränk analog eines gesüssten und karbonisierten Getränks. Das WO Patent 97/33813 betrifft eine Aerosoldose mit einem Ventil und einer Tülle. Mit dieser Dose ist es nicht möglich, einen zufriedenstellenden Schaumeffekt zu erzielen. Das ist ebenfalls der Fall für den Spenderkopf gemäss WO 94/28759, weil die seitliche Oeffnungen auf dem Spenderkopf mit der umgebenden Luft verbunden sind.

Der Erfindung liegt die Aufgabe zugrunde, eine Verpackung mit Milchkonzentrat bzw. mit Milch ohne Fett zu haben, bei deren Verwendung durch Ausspritzen ein Schaum erzeugt wird.

Die Erfindung betrifft eine Verpackung mit ihrem Inhalt, die aus der folgenden Kombination besteht :
- eine flüssige Phase, in der ein Treibgas gelöst ist,
- eine Aerosoldose mit einem Ventil versehen, die diese flüssige Phase enthält
- und eine Tülle unmittelbar nach dem Ventil, die das Aussprühen und Aufschäumen der flüssigen Phase ermöglicht und die eine zentrale Bohrung und 1 bis 5 seitliche Oeffnungen aufweist,
wobei die zentrale Bohrung und die seitliche Oeffnungen in einem und demselben Austrittröhrchen münden und mit dem Auslass des Ventils in Verbindung stehen, so dass die Milchphase durch die zentrale und seitliche Bohrungen aussprüht und die flüssige Phase aus der Gruppe von purer eingedickter Milch, Kondensmilch, Teil-Milchersatzprodukt und Total-Milchersatzprodukt gewählt wird, mit einem Fettgehalt zwischen 0 und 20 % und einem nichtfetten trockenen Anteil zwischen 6 und 25 %.

In der vorliegenden Beschreibung, sind alle Prozente in Gewicht gegeben.

Der Typ des Treibgases ist nicht kritisch. Man kann irgendwelches Gas verwenden, das im Lebensmittelbereich kompatibel ist. Man verwendet zum Beispiel N2O, HFC, HCFC oder CO2. Die Verwendung von N2O ist bevorzugt. Das Verhältnis Treibgas/flüssiger Phase ist herkömmlich, d. h. im Rahmen von 1:40 bis 1:50.

Die Grösse der Aerosoldose ist so dimensioniert, um ein Gewicht der flüssigen Phase von 100 bis 500 g zu enthalten. Das verwendete Ventil ist ebenfalls herkömmlich. Die Tülle hat vorzugsweise eine spezifische Geometrie, die hierunten näher erläutert wird : Diese Tülle erlaubt, einen zufriedenstellenden Schaum herzustellen. Unter zufriedenstellend versteht man einen Schaum mit einer guten Volumenzunahme und mit einer guten Remanenz.

Die möglichen flüssigen Phasen sind hieroben erwähnt. Als pure eingedickte Milch versteht man entweder eine Frischmilch, die einer Verdampfung unterzogen wurde, um den Wassergehalt zu reduzieren oder eine rekombinierte Milch, in der man den Trockensubstanzgehalt einstellen kann. Als rekombinierte Milch ist sowohl Milch aus Magermilchpulver und Vollmilchpulver vorgesehen. Diese pure eingedickte Milch kann Zucker, Süssstoffe oder Aromen enthalten. Der Gehalt dieser Zusätze liegt im Bereich von maximal 5%. Die Süssstoffe sind Zuckerersatz, wie zum Beispiel Saccharin oder Cyclamat. Die Aromen sind im Rahmen von unter 1 % enthalten und können in breitem Rahmen gewählt werden. Man verwendet zum Beispiel Schokolade, Kakao, Kaffee, Aromastoffe, Erdbeerextrakt, Vanille und Gewürze.

Die Kondensmilch ist änhlich zur puren eingedickten Milch, nur dass diese Milch zusätzlich Stabilisatoren enthält, wie zum Beispiel Dinatriumhydrogenphosphat. Diese Kondensmilch kann ebenfalls Zucker, Süssstoffe oder Aromen enthalten.

Als Teil-Milchersatzprodukt versteht man eine Milch, in der der Fettanteil aus Milchfettanteil und Pflanzenfett besteht, und die fettfreie Trockenmasse aus Milch, Molkeneiweisskonzentrat und Schaumstabilisatoren besteht. Dieses Teil-Milchersatzprodukt kann ebenfalls Zucker, Süssstoffe und/oder Aromen enthalten. Die Schaumstabilisatoren sind Gelatine, Carrageene, Guarkernmehl, Johannisbrotkernmehl oder Mono- und Diglyceride. Das Pflanzenfett wird aus der Gruppe von Kokosfett, Palmöl, Sojaöl, Maisöl gewählt.

Als Total-Milchersatzprodukt versteht man ein Produkt mit einem Fettanteil, das aus Pflanzenfett besteht und mit einem nichtfetten trockenen Anteil, der aus Kohlenhydraten, Kaseinaten und Schaumstabilisatoren besteht. Die Kohlenhydrate werden aus der Gruppe von Maltodextrin, Glukosesirup gewählt. Das Pflanzenfett und die Schaumstabilisatoren sind die gleichen wie schon oben erwähnt. Dieses Total-Milchersatzprodukt kann ebenfalls Zucker, Süssstoffe oder Aromen enthalten.

Die erfindungsgemässe Verpackung beinhaltet vorzugsweise eine flüssige Phase, die einen Fettgehalt zwischen 4 und 12 % und einen nichtfetten trockenen Anteil zwischen 15 und 20 % aufweist.

Die Tülle weist mindestens eine seitliche Oeffnung auf. Die Zahl dieser seitlichen Oeffnungen ist vorzugsweise zwischen 1 und 5. In der Figur weist die Tülle drei seitliche Oeffnungen auf. Die zentrale Bohrung hat normalerweise einen Durchmesser von ca. 1 mm und eine Bohrungsfläche von ca. 0,8 mm2. Die seitlichen Oeffnungen sind normalerweise rechteckig und jede Oeffnung hat eine Oeffnungsfläche von ca. 0,27 mm2. Das Verhältnis der zentralen Bohrungsfläche zu der seitlichen Oeffnungsfläche liegt zwischen 1:0,3 und 1:1,5.

Die zentrale Bohrung gibt beim Injizieren die Kraft und die Energie und die seitlichen Oeffnungen geben den Schaumeffekt. Es ist möglich, mit den seitlichen Oeffnungen einen Aufschlag von 350 % zu erreichen.

Die Herstellung der erfindungsgemässen Verpackung mit einer flüssigen Phase aus purer eingedickter Milch wird nach folgendem Prinzip hergestellt. Die Rohmilch wird nach üblichem Verfahren entrahmt und pasteurisiert. Diese Milch wird dann zur Erzielung des gewünschten Fett-/nichtfetten trockenen Anteils standardisiert und nach üblichem Verfahren konzentriert. Gegebenenfalls werden die übrigen Rezepturkomponenten in einem üblichen Mischverfahren beigemischt. Bei Varianten ohne Milchanteil erfolgt die Einmischung im Wasser. Auch Rekombination des Mischanteiles ist möglich. Die UHT-Sterilisation des Produkt wird dann durchgeführt mit folgenden Erhitzungsparameter :
- Temperatur zwischen 125 und 150 °C mit einer Zeit zwischen 1 Sekunde bis 5 Minuten.
Die Homogenisation des Produktes erfolgt dann mit Drücken von 30 bis 350 bar. Schliesslich wird eine sterile Abfüllung unter Zugabe von Treibgas in Aerosoldosen durchgeführt. Eine Aufsprühtülle, die eine Injektion des Produktes in den Kaffee unter Bildung eines glatten feinporigen Schaumes ermöglicht, wird auf das Ventil der Aerosoldose aufgesetzt. Durch diese sterile Abfüllung kann man eine Haltbarkeit von mindestens 6 Monaten bei gekühlter und ungekühlter Lagerung erzielen.

Mit der erfindungsgemässen Verpackung kann ein Schaum erzeugt werden. Eine Verwendung kann in Kaffee oder in Verbindung mit einem anderen Lebensmittel erfolgen, zum Beispiel im Dessertbereich, als Topping auf Früchten oder Fruchtsalaten. Der Schaum entspricht dem Schaum von Cappuccino. Das Produkt liegt in der Dose in flüssiger Form vor; beim Aussprühen mittels Treibgas wird der Schaum in der Tülle erzeugt. Durch die mögliche Injektion in den Kaffee kann ein gewisser Temperaturausgleich zwischen Schaum und Kaffee erfolgen.Das Aufschäumen und die Injektion in den Kaffee wird durch eine spezielle Sprühtülle ermöglicht. Die Tülle wird in Verbindung mit der nachstehenden Figur näher beschrieben.

Es kann auch Vorlage des Schaumes und späteres Aufgiessen des Kaffees erfolgen, damit wird die gleiche Wirkung im fertigen Kaffee erreicht. Durch den Schaum wird der Kaffee wie mit Kondensmilch geweisst.

Die Erfindung wird anhand der beiliegenden Zeichnungen erläutert, wobei
Fig. 1 zeigt einen Schnitt der Tülle und
Fig. 2 eine Aufsicht von unten gemäss Pfeil A.

Die Tülle (1) besteht aus einem Aufsatz (2), der oberhalb der Mündung des Ventils (3) sitzt, und einem Austrittsröhrchen (4). Auf dem Aufsatz hat man eine Druckstelle (5), welche die Betätigung des Ventils erlaubt. Das Austrittsröhrchen weist drinnen einen Stern (6) auf. Dieser Stern hat eine zentrale Bohrung (7) und drei seitlichen Oeffnungen (8). Die zentrale Bohrung hat einen Durchmesser von 1 mm und jede seitliche Oeffnung eine Breite von 0,66 mm und eine Höhe von 0,42 mm, was zu einer zentralen Fläche von 0,800 mm2 und einer gesamten seitlichen Fläche von 0,830 mm2 führt.

Es funktioniert folgendermassen : Der Konsument drückt auf die Stelle (5), was das Ventil öffnet. Die Milchphase fliesst dann in der Mittelbohrung (7) und aus den seitlichen Oeffnungen (8) in Form eines Schaumes. Das Fliessen in der Mitte bringt einen Injektionseffekt, das heisst einen Bewegungseffekt, während die seitliche Bohrung mehr einen grösseren Schaumeffekt erlaubt. Das Verhältnis der zentralen zur seitlichen Menge des Schaumes ist ca. 2:1. Der Injektionseffekt gibt ein gutes Diffundieren im Kaffee, was zu einem Temperaturausgleich führt.

Die Erfindung wird jetzt anhand der Beispiele näher erläutert.

### Beispiel 1

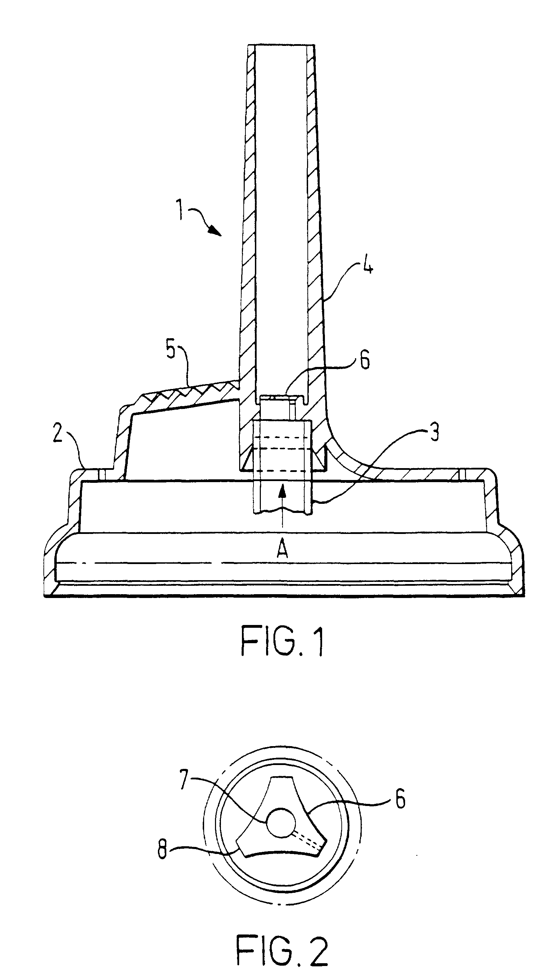

Die Rohmilch wird standardisiert, d. h. Fett wurde zugesetzt, um einen Fettgehalt von 10 % zu erzielen. Die erhaltene Milch wird dann konzentriert, um einen nichtfetten trockenen Anteil von 17 % zu bekommen. Eine UHT-Sterilisation bei 148 °C während 5 Sekunden wird durchgeführt und eine aseptische Abfüllung in eine Aerosoldose findet dann statt. Eine Tülle gemäss Figur 1 und 2 wird aufgesetzt.
Die Mindesthaltbarkeit für dieses Produkt beträgt ca. 6 Monate. Die Schaumhöhe auf Kaffee soll 1-2 cm sein mit einer Schaumremanenz von 3 Minuten . Das Treibgas ist N2O mit einem Gewicht von ca. 2 g in ca. 250-260 g Milch.

### Beispiel 2

Ein ähnlicher Versuch wie im Beispiel 1 wurde durchgeführt mit dem Unterschied, dass der Fettgehalt auf 8 % festgesetzt wurde und mit einem nichtfetten trockenen Anteil von 17 %.

Was den Schaum betrifft, erzielte man ein ähnliches Resultat.

## Patentansprüche

1. Verpackung mit ihrem Inhalt, die aus der folgenden Kombination besteht :
- eine flüssige Phase, in der ein Treibgas gelöst ist,
- eine Aerosoldose mit einem Ventil versehen, die diese flüssige Phase enthält
- und eine Tülle (1)unmittelbar nach dem Ventil, die das Aussprühen und Aufschäumen der flüssigen Phase ermöglicht und die eine zentrale Bohrung (7) und 1 bis 5 seitliche Oeffnungen (8) aufweist,
wobei die zentrale Bohrung (7) und die seitliche Oeffnungen (8) in einem und demselben Austrittröhrchen (4) münden und mit dem Auslass des Ventils in Verbindung stehen, so dass die Milchphase durch die zentrale und seitliche Bohrungen aussprüht und die flüssige Phase aus der Gruppe von purer eingedickter Milch, Kondensmilch, Teil-Milchersatzprodukt und Total-Milchersatzprodukt gewählt wird, mit einem Fettgehalt zwischen 0 und 20 % und einem nichtfetten trockenen Anteil zwischen 6 und 25 %.

2. Verpackung gemäss Anspruch 1, **dadurch gekennzeichnet, dass** das Treibgas aus der Gruppe von N2O, HFC, HCFC und CO2 gewählt wird.

3. Verpackung gemäss Ansprüche 1 oder 2, **dadurch gekennzeichnet, dass** die flüssige Phase einen Fettgehalt zwischen 4 und 12 % und einen nichtfetten trockenen Anteil zwischen 15 und 20 % besitzt.

4. Verpackung gemäss Ansprüche 1 bis 3, **dadurch gekennzeichnet, dass** die flüssige Phase auch Zucker, Süssstoffen oder Aromen enthält.

5. Verpackung gemäss Ansprüche 1 bis 4, **dadurch gekennzeichnet, dass** das Teil-Milchersatzprodukt was den Fettanteil betrifft, aus Milchfettanteil und Pflanzenfett besteht, und was die fettfreie Trockenmasse betrifft, aus Milch , Milcheiweisskonzentrat, Molkeneiweisskonzentrat und Schaumstabilisatoren besteht.

6. Verpackung gemäss Ansprüche 1 bis 4, **dadurch gekennzeichnet, dass** beim Total-Milchersatzprodukt der Fettanteil aus Pflanzenfett besteht und der nichtfette trockene Anteil aus Kohlenhydraten, Kaseinaten und Schaumstabilisatoren besteht.

7. Verpackung gemäss Ansprüche 5 oder 6, **dadurch gekennzeichnet, dass** das Pflanzenfett aus der Gruppe von Kokosfett, Palmöl, Maisöl gewählt wird.

8. Verpackung gemäss Ansprüche 5 oder 6, **dadurch gekennzeichnet, dass** die Schaumstabilisatoren aus der Gruppe von Gelatine, Carrageene, Guarkernmehl, Johannisbrotkernmehl und Mono- und Diglyceride gewählt werden.

9. Verpackung gemäss Ansprüche 1 bis 8, **dadurch gekennzeichnet, dass** die Tülle (1) 3 seitliche Oeffnungen (8) aufweist.

## Claims

1. A package with the contents thereof consisting of the following combination:
- a liquid phase, in which a propellant gas is dissolved,
- an aerosol can provided with a valve, which can contains said liquid phase
- and a spout (1) directly downstream from the valve, which spout enables spraying and foaming of the liquid phase and comprises a central bore (7) and 1 to 5 lateral openings (8),
wherein the central bore (7) and the lateral openings (8) open into one and the same discharge tube (4) and are connected with the valve outlet, such that the milk phase sprays out through the central and lateral bores and the liquid phase is selected from the group comprising pure evaporated milk, condensed milk, partial milk substitute and complete milk substitute, having a fat content of between 0 and 20% and a non-fat solids content of between 6 and 25%.

2. Package according to claim 1, **characterised in that** the propellant gas is selected from the group comprising N₂O, HFC, HCFC and CO₂.

3. Package according to claim 1 or 2, **characterised in that** the liquid phase has a fat content of between 4 and 12% and a non-fat solids content of between 15 and 20%.

4. Package according to claims 1 to 3, **characterised in that** the liquid phase also contains sugar, sweeteners or flavourings.

5. Package according to claims 1 to 4, **characterised in that**, with regard to the fat content, the partial milk substitute consists of a milk fat fraction and vegetable fat and, with regard to the fat-free solids, of milk, milk protein concentrate, whey protein concentrate and foam stabilisers.

6. Package according to claims 1 to 4, **characterised in that** the fat content of the complete milk substitute consists of vegetable fat and the non-fat solids content consists of carbohydrates, caseinates and foam stabilisers.

7. Package according to claim 5 or 6, **characterised in that** the vegetable fat is selected from the group comprising coconut fat, palm oil and corn oil.

8. Package according to claim 5 or 6, **characterised in that** the foam stabilisers are selected from the group comprising gelatine, carrageens, guar flour, carob flour and mono- and diglycerides.

9. Package according to claims 1 to 8, **characterised in that** the spout (1) comprises 3 lateral openings (8).

## Revendications

1. Conditionnement avec son contenu, constitué des combinaisons suivantes :
- une phase liquide dans laquelle est dissous un gaz de propulsion,
- une bombe aérosol contenant cette phase liquide, qui est munie d'une soupape,
- et un bec (1) situé directement derrière la soupape, qui permet la pulvérisation et la dispersion de la phase liquide à l'état de mousse, et qui comporte un perçage central (7) et 1 à 5 orifices latéraux (8),
le perçage central (7) et les orifices latéraux (8) débouchant dans un seul et même tube de sortie (4), et étant reliés à la sortie de la soupape, de sorte que la phase lait soit pulvérisée à travers le perçage central et les perçages latéraux, et la phase liquide étant choisie parmi le groupe de lait pur épaissi, de lait condensé, d'un produit de substitution partiel du lait et d'un produit de substitution total du lait, avec une teneur en matières grasses comprise entre 0 et 20 %, et une teneur en matières sèches non grasses comprise entre 6 et 25 %.

2. Conditionnement selon la revendication 1, **caractérisé en ce que** le gaz de propulsion est choisi dans le groupe du N₂O, HFC, HCFC et du CO₂.

3. Conditionnement selon la revendication 1 ou 2, **caractérisé en ce que** la phase liquide possède une teneur en matières grasses qui est comprise entre 4 et 12 %, et une teneur en matières sèches non grasses qui est comprise entre 15 et 20 %.

4. Conditionnement selon l'une quelconque des revendications 1 à 3, **caractérisé en ce que** la phase liquide contient également du sucre, des édulcorants ou des arômes.

5. Conditionnement selon l'une quelconque des revendications 1 à 4, **caractérisé en ce que** le produit de substitution partiel du lait est constitué, en ce qui concerne la teneur en matières grasses, de matières grasses de lait et de graisse végétale, et en ce qui concerne la masse sèche sans matières grasses, de lait, de concentré d'albumen de lait, de concentré d'albumen de lactosérum et de stabilisants de mousse.

6. Conditionnement selon l'une quelconque des revendications 1 à 4, **caractérisé en ce que** la teneur en matières grasses du produit de substitution total du lait est constituée de graisse végétale, et la teneur en matières sèches non grasses d'hydrates de carbone, de caséinates et de stabilisants de mousse.

7. Conditionnement selon la revendication 5 ou 6, **caractérisé en ce que** la graisse végétale est choisie dans le groupe graisse de coco, huile de palme, huile de maïs.

8. Conditionnement selon la revendication 5 ou 6, **caractérisé en ce que** les stabilisants de mousse sont choisis dans le groupe gélatines, carragheenates, farine de graines de guar, farine de graines de caroube, monoglycérides et diglycérides.

9. Conditionnement selon l'une quelconque des revendications 1 à 8, **caractérisé en ce que** le bec (1) comporte 3 orifices latéraux (8).
